# EUROPEAN PATENT SPECIFICATION

(11) **EP 1 215 241 B1**
(45) Date of publication and mention of the grant of the patent: **03.08.2005**
(21) Application number: 01128345.4
(22) Date of filing: 30.11.2001
(51) Int. Cl.: C08L 23/22, C08L 23/28, C08F 210/12

(54) **Process for the preparation of isobutene/isoprene copolymers**
Verfahren zur Herstellung von Isobuten-Isopren Kopolymeren
Procede de la preparation de copolymeres d'isobutene/isoprene

(30) Priority: 12.12.2000 EP 00126553
(43) Date of publication of application: 19.06.2002
(73) Proprietor: LANXESS Deutschland GmbH, 51368 Leverkusen (DE)
(72) Inventor: Langstein, Gerhard, Dr., 51515 Kürten (DE); Bohnenpoll, Martin, Dr., 51375 Leverkusen (DE); Sumner, Anthony, 51061 Köln (DE); Verhelst, Marc, 2900 Schoten (BE)

(56) References cited:
- EP-A- 0 556 965
- EP-A- 0 818 476
- DE-B- 1 180 123
- US-A- 3 928 297
- US-A- 4 039 506
- US-A- 5 434 212
- US-A- 5 883 207

## Description

### TECHNICAL FIELD

The present invention relates to a process for the preparation of isobutene/isoprene-copolymers with a gel content of less than 1.2 wt.%, a molecular weight M_{w} of greater than 240 kg/mol and an isoprene content of greater than 2.5 mol%. This isobutene/isoprene-copolymers can be used in a rubber composition for a tire tube, especially in a rubber composition for a tire tube of motor car tire.

### BACKGROUND ART

It is known that there are usually two types of tire structures for maintaining the inner pressure of an air-containing tire, that is, a structure composed of a tire and a tube not integrated with the tire, and a tubeless structure where a tire itself functions as a container for air.

Needless to say, the role of tube is to prevent escaping of air, so that not only air tightness at a joint of a tube and a valve, but also gas permeability of the wall of the tube itself (inversely, air tightness) is an important factor.

The gas permeability is an inherent property of the polymer used. Practically speaking, there is not any polymer better than butyl rubber (isobutylene-isoprene rubber, IIR). Even at present, tubes are usually produced by using IIR as a main component.

Butyl rubber is a copolymer of an isoolefin and one or more multiolefins as comonomers. Commercial butyl comprise a major portion of isoolefin and a minor amount, not more than 2.5 wt%, of a multiolefin. The preferred isoolefin is isobutylene.

Suitable multiolefins include isoprene, butadiene, dimethyl butadiene, piperylene, etc. of which isoprene is preferred.

Butyl rubber is generally prepared in a slurry process using methyl chloride as a vehicle and a Friedel-Crafts catalyst as the polymerization initiator. The methyl chloride offers the advantage that AlCl₃ a relatively inexpensive Friedel-Crafts catalyst is soluble in it, as are the isobutylene and isoprene comonomers. Additionally, the butyl rubber polymer is insoluble in the methyl chloride and precipitates out of solution as fine particles. The polymerization is generally carried out at temperatures of about -90°C to -100°C. See U.S. Patent No. 2,356,128 and *Ullmanns Encyclopedia of Industrial Chemistry,* volume A 23, 1993, pages 288-295. The low polymerization temperatures are required in order to achieve molecular weights which are sufficiently high for rubber applications.

However, a higher degree of unsaturation would be desirable for more efficient crosslinking with other, highly unsaturated diene rubbers (BR, NR or SBR) present in the tire and therefore improving the performance of the tire tube and would enable a sufficient fast cure without using nitrosamine producing accelerators as tetramethyl thiurame disulfide (TMTD).

Raising the reaction temperature or increasing the quantity of isoprene in the monomer feed results in more poor product properties, in particular, in lower molecular weights. The molecular weight depressing effect of multiolefin comonomers may, in principle, be offset by still lower reaction temperatures. However, in this case the secondary reactions, which result in gelation occur to a greater extent. Gelation at reaction temperatures of around -120°C and possible options for the reduction thereof have been described (*c.f.* W.A. Thaler, D.J. Buckley Sr., Meeting of the Rubber Division, ACS, Cleveland, Ohio, May 6-9, 1975, published in *Rubber Chemistry & Technology* 49, 960-966 (1976)). The auxiliary solvents such as CS₂ required for this purpose are not only difficult to handle, but must also be used at relatively high concentrations which disturbs the performance of the resulting butyl rubber in the tire tube.

It is known from EP-A1-818 476 to use a vanadium initiator system at relatively low temperatures and in the presence of an isoprene concentration which is slightly higher than conventional (approx. 2 mol% in the feed), but, as with AlCl₃-catalyzed copolymerization at -120°C, in the presence of isoprene concentrations of >2.5 mol% this results in gelation even at temperatures of-70°C.

In the US-Patent 5,883,207 a process for preparing isobutene-cyclodiene-copolymers having a number-average molecular weight of at least 100.000 and an unsaturation of 1 - 30 % by mol is described. It is also mentioned that the polymerization is carried out without gelation. Isobutene/isoprene-copolymers having elevated double bond contents and simultaneously low gel contents are not described. In DE-A 1180123 rubber mixtures are described with improved properties of the resulting vulcanizates. In US-A 4,039,506 an inner tube which comprises curable blend of conjugated diene-containing butyl rubber and rubber selected from the group consisting of butyl or halogenated butyl rubber, carbon black, oil and a vulcanization system is described. Neither DE-A 1180123 nor US-A 4,039,506 describes a process for the preparation of an isobutene/isoprene-copolymer having - as mentioned above - elevated double bond contents and simultaneously low gel contents. Example 6 in table VIII of US-A 3,928,297 discloses isobutene/isoprene polymers of high unsaturation, Mₙ = 251.000, M_{w} = 352.000, which are substantially gel-free. The use of this type of polymers for inner tubes and their properties apparently useful for tires are also mentioned in the document. There is not mentioned a process for the preparation of the polymers in the presence of an organic nitro compound.

### SUMMARY OF THE INVENTION

The object of the present invention is to provide a process for the preparation of isobutene/isoprene-copolymers with optional further monomers with an isoprene content of greater than 2.5 mol%, a molecular weight M_{w} of greater than 240 kg/mol and a gel content of less than 1.2 wt.% comprising polymerizing isobutene, isoprene and optionally further monomers in the presence of a catalyst and an organic nitro compound.

### DETAILED DESCRIPTION OF THE INVENTION

As optional monomers every monomer copolymerizable with the isoolefins and/or dienes known by the skilled in the art can be used. Styrene, alpha-methyl styrene, various alkyl styrenes including p-methylstyrene, p-methoxy styrene, 1-vinylnaphthalene, 2-vinyl naphthalene, 4-vinyl toluene are preferably used.

The isoprene content is greater than 2.5 mol%, preferably greater than 3.5 mol%, more preferably greater than 5 mol%, even more preferably greater than 7 mol%.

The molecular weight M_{w} is greater than 240 kg/mol, preferably greater than 300 kg/mol, more preferably greater than 350 kg/mol, even more preferably greater than 400 kg/mol.

The gel content is less than 1.2 wt.%, preferably less than 1 wt%, more preferably less than 0.8 wt%, even more preferably less than 0.7 wt%.

The polymerization is preferably performed in the presence of an organic nitro compound and a catalyst/initiator selected from the group consisting of vanadium compounds, zirconium halogenid, hafnium halogenides, mixtures of two or three thereof, and mixtures of one, two or three thereof with AlCl₃, and from AlCl₃ deriveable catalyst systems, diethylaluminum chloride, ethylaluminum chloride, titanium tetrachloride, stannous tetrachloride, boron trifluoride, boron trichloride, or methylalumoxane.

The polymerization is preferably performed in a suitable solvent, such as chloroalkanes, in such a manner that
- in case of vanadium catalysis the catalyst only comes into contact with the nitroorganic compound in the presence of the monomer
- in case of zirconium/hafnium catalysis the catalyst only comes into contact with the nitroorganic compound in the absence of the monomer.

The nitro compounds used in this process are widely known and generally available. The nitro compounds preferably used according to the invention are disclosed in copending DE 100 42 118.0 which is incorporated by reference herein and are defined by the general formula (I)

R-NO₂ (I)

wherein R is selected from the group H, C₁-C₁₈ alkyl, C₃-C₁₈ cycloalkyl or C₆-C₂₄ cycloaryl.

C₁-C₁₈ alkyl is taken to mean any linear or branched alkyl residues with 1 to 18 C atoms known to the person skilled in the art, such as methyl, ethyl, n-propyl, i-propyl, n-butyl, i-butyl, t-butyl, n-pentyl, i-pentyl, neopentyl, hexyl and further homologues, which may themselves in turn be substituted, such as benzyl. Substituents, which may be considered in this connection, are in particular alkyl or alkoxy and cycloalkyl or aryl, such benzoyl, trimethylphenyl, ethylphenyl. Methyl, ethyl and benzyl are preferred.

C₆-C₂₄ aryl means any mono- or polycyclic aryl residues with 6 to 24 C atoms known to the person skilled in the art, such as phenyl, naphthyl, anthracenyl, phenanthracenyl and fluorenyl, which may themselves in turn be substituted. Substituents which may in particular be considered in this connection are alkyl or alkoxyl, and cycloalkyl or aryl, such as toloyl and methylfluorenyl. Phenyl is preferred.

C₃-C₁₈ cycloalkyl means any mono- or polycyclic cycloalkyl residues with 3 to 18 C atoms, such as cyclopropyl, cyclobutyl, cyclopentyl, cyclohexyl, cycloheptyl, cyclooctyl and further homologues, which may themselves, in turn, be substituted. Substituents which may, in particular, be considered in this connection are alkyl or alkoxy, and cycloalkyl or aryl, such as benzoyl, trimethylphenyl, ethylphenyl. Cyclohexyl and cyclopentyl are preferred.

The concentration of the organic nitro compound in the reaction medium is preferably in the range from 1 to 15000 ppm, more preferably in the range from 5 to 500 ppm. The ratio of nitro compound to vanadium is preferably of the order of 1000:1, more preferably of the order of 100:1 and most preferably in the range from 10:1 to 1:1. The ratio of nitro compound to zirconium/hafnium is preferably of the order of 100 : 1, more preferably of the order of 25: 1 and most preferably in the range from 14:1 to 1:1.

The monomers are generally polymerized cationically at temperatures in the range from -120°C to +20°C, preferably in the range from -100°C to -20°C, and pressures in the range from 0.1 to 4 bar.

Inert solvents or diluents known to the person skilled in the art for butyl polymerization may be considered as the solvents or diluents (reaction medium). These comprise alkanes, chloroalkanes, cycloalkanes or aromatics, which are frequently also mono- or polysubstituted with halogens. Hexane/chloroalkane mixtures, methyl chloride, dichloromethane or the mixtures thereof may be mentioned in particular. Chloroalkanes are preferably used in the process according to the present invention.

Suitable vanadium compounds are known to the person skilled in the art from EP A1-818 476 which is incorporated by reference herein. Vanadium chloride is preferably used. This may advantageously be used in the form of a solution in an anhydrous and oxygen-free alkane or chloroalkane or a mixture of the two with a vanadium concentration of below 10 wt.%. It may be advantageous to store (age) the V solution at room temperature or below for a few minutes up to 1000 hours before it is used. It may be advantageous to perform this aging with exposure to light.

Suitable zirconium halogenids and hafnium halogenids are disclosed in DE 100 42 118.0 which is incorporated by reference herein. Preferred are zirconium dichloride, zirconium trichloride, zirconium tetrachloride, zirconium oxidichloride, zirconium tetrafluoride, zirconium tetrabromide, and zirconium tetraiodide, hafnium dichloride, hafnium trichloride, hafnium oxidichloride, hafnium tetrafluoride, hafnium tetrabromide, hafnium tetraiodide, and hafnium tetrachloride. Less suitable are in general zirconium and/or hafnium halogenides with sterically demanding substituents, e.g. zirconocene dichloride or bis(methylcyclopentadienyle)zirconium dichchloride. Preferred is zirconium tetrachloride.

Zirconium halogenids and hafnium halogenids are advantageously used as a solution in a water- and oxygen free alkan or chloroalkan or a mixture thereof in presence of the organic nitro compounds in a zirconium/hafnium concentration below of 4 wt.%. It can be advantageous to store said solutions at room temperature or below for a period of several minutes up to 1000 hours (aging), before using them. It can be advantageous to store them under the influence of light.

Polymerization may be performed both continuously and discontinuously. In the case of continuous operation, the process is preferably performed with the following three feed streams:
I) solvent/diluent + isoolefin (preferably isobutene)
II) multiolefin (preferably diene, isoprene) (+ organic nitro compound in case of vanadium catalysis)
III) catalyst (+ organic nitro compound in case of zirconium/hafnium catalysis)

In the case of discontinuous operation, the process may, for example, be performed as follows:

The reactor, precooled to the reaction temperature, is charged with solvent or diluent, the monomers and, in case of vanadium catalysis, with the nitro compound. The initiator, in case of zirconium/hafnium catalysis together with the nitro compound, is then pumped in the form of a dilute solution in such a manner that the heat of polymerization may be dissipated without problem. The course of the reaction may be monitored by means of the evolution of heat.

All operations are performed under protective gas. Once polymerization is complete, the reaction is terminated with a phenolic antioxidant, such as, for example, 2,2'-methylenebis(4-methyl-6-tert.-butylphenol), dissolved in ethanol.

Using the process according to the present invention, it is possible to produce high molecular weight isoolefin copolymers having elevated double bond contents and simultaneously low gel contents. The double bond content is determined by proton resonance spectroscopy.

This process provides isobutene/isoprene-copolymers with an isoprene content of greater than 2.5 mol%, a molecular weight M_{w} of greater than 240 kg/mol and a gel content of less than 1.2 wt.%.

### EXAMPLES

### Experimental details

Gel contents were determined in toluene after a dissolution time of 24 hours at 30°C with a sample concentration of 12.5 g/l. Insoluble fractions were separated by ultracentrifugation (1 hour at 20000 revolutions per minute and 25°C).

The solution viscosity η of the soluble fractions was determined by Ubbelohde capillary viscosimetry in toluene at 30°C. **The molecular mass M**_{**v**} was calculated according to the following formula: In (Mᵥ) = 12,48 + 1,565 * ln η.

GPC analysis was performed by a combination of four, 30 cm long columns from the company Polymer Laboratories (PL-Mixed A). The internal diameter of the columns was 0.75 cm). Injection volume was 100 µl. Elution with THF was performed at 0.8 ml/min. Detection was performed with a UV detector (260 nm) and a refractometer. Evaluation was performed using the Mark-Houwink relationship for polyisobutylene (dn/dc = 0.114; α = 0.6; K = 0.05).

Mooney-Viscosity was measured at 125 °C with a total time of 8 minutes (ML 1+8 125°C).

The concentrations of the monomers in the polymer and the "**branching point**"¹ were detected by NMR.
**Isobutene** (Fa. Gerling+Holz, Deutschland, Qualität 2.8) was purified by purging through a column filled with sodium on aluminum oxide (Na-content 10 %).
**Isoprene** (Fa. Acros, 99%) was purified by purging through a column filled with dried aluminum oxide, and destilled under argon over calcium hydride. The water content was 25 ppm.
**Methyl chloride** (Fa. Linde, Qualität 2.8) was purified by purging through a column filled with active carbon black and another column with Sicapent.
**Methylene chloride** (Fa. Merck, Qualität: Zur Analyse ACS, ISO) was destilled under argon over phosphorous pentoxide.
**Hexane** was purified by destillation under argon over calcium hydride.
**Nitromethane** (Fa. Aldrich, 96 %) was stirred for 2 hours over phosphorous pentoxid, during this stirring argon was purged through the mixture. Then the nitromethane was destilled in vacuo (about 20 mbar).
**Vanadium tetrachloride** (Fa. Aldrich) was filtered through a glass filter under an argon atmosphere prior to use.

¹ J. L. White, T. D. Shaffer, C. J. Ruff, J. P. Cross: Macromolecules (1995) 28, 3290

### Example 1

300 g (5.35 mole) of isobutene were initially introduced together with 700 g of methyl chloride and 27.4 g (0.4 mole) of isoprene at -90°C under an argon atmosphere and with exclusion of light. 0.61 g (9.99 mmole) of nitromethane was added to the monomer solution before the beginning of the reaction. A solution of vanadium tetrachloride in hexane (concentration: 0.62 g of vanadium tetrachloride in 25 ml of n-hexane) was slowly added dropwise (duration of feed approx. 15-20 minutes) to this mixture until the reaction started (detectable by an increase in the temperature of the reaction solution).

After a reaction time of approx. 10-15 minutes, the exothermic reaction was terminated by adding a precooled solution of 1 g of 2,2'-methylenebis(4-methyl-6-tert.-butylphenol) (Vulkanox BKF from Bayer AG, Leverkusen) in 250 ml of ethanol. Once the liquid had been decanted off, the precipitated polymer was washed with 2.5 l of ethanol, rolled out into a thin sheet and dried for one day under a vacuum at 50°C.

8.4 gr. of polymer were isolated. The copolymer had a intrinsic viscosity of 1.28 dl/g, a gel content of 0.8 wt.%, an isoprene content of 4.7 mole%, a Mₙ of 126 kg/mole, a M_{w} of 412.1 kg/mole, and a swelling index in toluene at 25°C of 59.8.

### Example 2

110.15 g (1.96 mole) of isobutene were initially introduced together with 700 g of methyl chloride and 14.85 g (0.22 mole) of isoprene at -95°C under an argon atmosphere. A solution of 0.728 g (3.12 mmole) zirkonium tetrachloride and 2.495 g (40.87 mmole) of nitromethane in 25 ml of methylene chloride was slowly added dropwise within 30 minutes to this mixture.

After a reaction time of approx. 60 minutes, the exothermic reaction was terminated by adding a precooled solution of 1 g of Irganox 1010 (Ciba) in 250 ml of ethanol. Once the liquid had been decanted off, the precipitated polymer was washed with 2.5 l of acetone, rolled out into a thin sheet and dried for one day under a vacuum at 50°C.

47.3 g of polymer were isolated. The copolymer had a intrinsic viscosity of 1.418 dl/g, a gel content of 0.4 wt.%, an isoprene content of 5.7 mole%, a Mₙ of 818.7 kg/mole, a M_{w} of 2696 kg/mole, and a swelling index in toluene at 25°C of 88.2.

## Claims

1. A process for the preparation of an isobutene/isoprene-copolymer with optional further monomers with an isoprene content of greater than 2.5 mol%, a molecular weight M_{w} of greater than 240 kg/mol and a gel content of less than 1.2 wt.% comprising polymerizing isobutene, isoprene and optionally further monomers in the presence of a catalyst and an organic nitro compound.

2. A process according to claim 1, wherein said organic nitro compound is of the general formula (I)
R-NO₂ (I)
wherein R represents H, C₁-C₁₈ alkyl, C₃-C₁₈ cycloalkyl or C₆-C₂₄ cycloaryl.

3. A process of claims 1 and 2, wherein the concentration of said organic nitro compound in the reaction medium is in the range from 1 to 1000 ppm.

4. A process of claims 1 to 3, wherein said catalyst is selected from the group consisting of vanadium compounds, zirconium halogenids, hafnium halogenides, mixtures of two or three thereof, and mixtures of one, two or three thereof with AlCl₃ and from AlCl₃ deriveable catalyst systems, diethylaluminum chloride, ethylaluminum chloride, titanium tetrachloride, stannous tetrachloride, boron trifluoride, boron trichloride, or methylalumoxane.

## Patentansprüche

1. Verfahren zur Herstellung eines Isobuten/Isopren-Copolymers mit gegebenenfalls weiteren Monomeren mit einem Isopren-Gehalt von größer als 2,5 Mol-%, einer Molmasse M_{w} von größer als 240 kg/mol und einem Gelgehalt von weniger als 1,2 Gew.-%, das die Polymerisation von Isobuten, Isopren und gegebenenfalls von weiteren Monomeren in Gegenwart eines Katalysators und einer organischen Nitro-Verbindung umfasst.

2. Verfahren gemäß Anspruch 1, wobei die organische Nitro-Verbindung die allgemeine Formel
R-NO₂ (I)
aufweist, in der R H, C₁-C₁₈-Alkyl, C₃-C₁₈-Cycloalkyl oder C₆-C₂₄-Cycloaryl darstellt.

3. Verfahren gemäß den Ansprüchen 1 und 2, wobei die Konzentration der organischen Nitro-Verbindung im Reaktionsmedium im Bereich von 1 ppm bis 1000 ppm liegt.

4. Verfahren gemäß den Ansprüchen 1 bis 3, wobei der Katalysator aus der Gruppe ausgewählt ist, bestehend aus Vanadium-Verbindungen, Zirconiumhalogeniden, Hafniumhalogeniden, Mischungen von zweien oder dreien derselben und Mischungen von einem, zweien oder dreien derselben mit AlCl₃ und aus von AlCl₃-ableitbaren Katalysatorsystemen, Diethylaluminumchlorid, Ethylaluminumchlorid, Titantetrachlorid, Zinn(II)tetrachlorid, Bortrifluorid, Bortrichlorid oder Methylalumoxan.

## Revendications

1. Procédé de préparation d'un copolymère d'isobutène/isoprène avec d'autres monomères facultatifs ayant une teneur en isoprène supérieure à 2,5 % en mol, une masse molaire M_{w} supérieure à 240 kg/mol et une teneur en gel inférieure à 1,2 % en masse, comprenant la polymérisation d'isobutène, d'isoprène et éventuellement d'autres monomères en présence d'un catalyseur et d'un composé nitro organique.

2. Procédé selon la revendication 1, dans lequel le composé nitro organique a la formule générale (I)
R-NO₂ (I)
dans laquelle R représente H, alkyle en C₁-C₁₈, cycloalkyle en C₃-C₁₈ ou cycloaryle en C₆-C₂₄.

3. Procédé selon les revendications 1 et 2, dans lequel la concentration dudit composé nitro organique dans le milieu réactionnel se situe dans l'intervalle de 1 à 1 000 ppm.

4. Procédé selon les revendications 1 à 3, dans lequel ledit catalyseur est choisi dans le groupe constitué par des composés du vanadium, des halogénures de zirconium, des halogénures de hafnium, des mélanges de deux ou trois d'entre eux, et des mélanges d'un, deux ou trois d'entre eux avec AlCl₃ et des systèmes de catalyseurs pouvant dériver de AlCl₃, le chlorure de diéthylaluminium, le chlorure d'éthylaluminium, le tétrachlorure de titane, le tétrachlorure d'étain, le trifluorure de bore, le trichlorure de bore ou le méthylalumoxane.
